# EUROPEAN PATENT SPECIFICATION

(11) **EP 2 076 032 B1**
(45) Date of publication and mention of the grant of the patent: **13.02.2013**
(21) Application number: 08172931.1
(22) Date of filing: 24.12.2008
(51) Int. Cl.: H04N 5/445, H04L 29/06, H04N 7/26

(54) **Method and apparatus for processing service guide information**
Verfahren und Vorrichtung zur Verarbeitung von Dienstführerinformationen
Procédé et appareil pour le traitement d'informations d'un guide de services

(30) Priority: 26.12.2007 KR 20070137436
(43) Date of publication of application: 01.07.2009
(73) Proprietor: LG Electronics Inc., Seoul 150-721 (KR)
(72) Inventor: Moon, Kyoung Soo, Seoul 137-724 (KR); Choi, Jin Young, Seoul 137-724 (KR)
(74) Representative: Cabinet Plasseraud

(56) References cited:
- EP-A2- 1 753 166
- WO-A1-2006/072825
- WO-A1-2007/052989
- WO-A1-2007/080500
- US-A1- 2007 086 465

## Description

The present invention relates to a method and apparatus for processing data, and more particularly, to a method and apparatus for processing service guide information through a broadcast channel and an interactive channel..

A content refers to data content or information including image, sound, and text that are provided to users through wired and/or wireless communication. Recent data contents are created by using digital method in order to be provided through various broadcast channels and interactive channels. For example, a user may download through an interactive channel, such as the Internet, a previously viewed data content provided via broadcasting and view the downloaded data content. As broadcast systems and communication systems are being integrated, a solution for providing users with the same data content from a broadcast system and a communication system is now being taken into consideration. More specifically, a solution enabling a terminal to access data content via a broadcast channel and an interactive channel is now being developed.

WO 2006/072825 relates to a method for allowing content to be delivered over different types of networks.

Accordingly, the present invention is directed to a method and apparatus for processing service guide information that substantially obviate one or more problems due to limitations and disadvantages of the related art.

An object of the present invention is to provide a method and apparatus for processing service guide information that can efficiently acquire service guide information.

Another object of the present invention is to provide a method and apparatus for processing service guide information that can use the service guide information to easily receive a media object.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for processing service guide information includes the steps of receiving electronic service guide delivery information, receiving electronic service guide information including media object list information listing media objects, wherein the media object list information is grouped by a logical unit and each group is identified by an identifier, wherein at least one of groups identified by the same identifier is received through a same transmission path and wherein the media object list information includes media object access information, wherein the media object access information enables a corresponding media object to be selectively received through a separate transmission path different from a transmission path of the grouped media object list information, and receiving the media object using the media object access information.

The media object access information corresponds to access information on a single media object unit or to access information on a media object group, wherein multiple media objects are grouped to a single unit.

The media object list information is included in an interactivity fragment of the service guide information.

The media object access information includes an element describing information enabling the media object to be transmitted to a session of a broadcasting system, and an element describing information enabling the media object to be transmitted through an interactive channel to a session of an accessible system

In another aspect of the present invention, a apparatus for processing service guide information including a receiving unit, a control unit, and a communicator. The receiving unit receives electronic service guide delivery information and receives a signal, which carries service guide information including media object list information listing media objects, wherein the media object list information is grouped by a logical unit and each group is identified by an identifier, wherein at least one of groups identified by the same identifier is received through a same transmission path and wherein the media object list information includes media object access information, wherein the media object access information enables a corresponding media object to be selectively received through a separate transmission path different from that of the grouped media object list information. The control unit decodes the received signal and decodes the service guide information. And, the communicator receives the media object list information and media objects listed in the media object list information, based upon the media object access information of the decoded service guide information.

Furthermore, the control unit may include an internet protocol (IP) decapsulator, a user datagram protocol (UDP), a file delivery over unidirectional transport protocol (FLUTE) decoder, and a parser. The IP decapsulator decapsulates an IP datagram including the service guide information. The UDP decoder decodes the decapsulated data based upon the UDP. The FLUTE decoder decodes the UDP-decoded data based upon the FLUTE. And, the parser parses the FLUTE-decoded data.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates an exemplary structure of service guide information based upon an XML format;

FIG. 2 illustrates an example of receiving a media object from the service guide information;

FIG. 3 illustrates an exemplary structure of a list information of the media object;

FIG. 4 illustrates another example of a media object set shown in FIG. 3;

FIG. 5 illustrates an exemplary structure of an access type element shown in FIG. 4;

FIG. 6 illustrates a transmitting system transmitting service guide information according to an embodiment of the present invention;

FIG. 7 illustrates a modulator/encoder;

FIG. 8 illustrates an exemplary signal positioning based upon a frame created by a frame generator;

FIG. 9 illustrates an example of broadcast program, contents, and data being transmitted through a channel;

FIG. 10 and FIG. 11 respectively illustrate receiving systems receiving service guide information according to the present invention;

FIG. 12 illustrates an example of service guide information or a protocol stack to which service guide information is transmitted; and

FIG. 13 illustrates a method for processing service guide information according to an embodiment of the present invention.

Reference will now be made in detail to the preferred embodiments of the present invention, examples of which are illustrated in the accompanying drawings. Wherever possible, the same reference numbers will be used throughout the drawings to refer to the same or like parts.

Hereinafter, the service guide information will indicate information associated with a service or data content provided by a service and content provider. The service guide information includes information for describing, accessing, and purchasing the service or data content provided by the service and content provider. The service guide information may be transmitted (or delivered) to a terminal owned by the user through a broadcast channel or an interactive channel. The interactive channel indicates a channel through which two-way communication is performed, and the broadcast channel indicates a one-way communication channel that does not designate a user in a multicast. For the user, the service guide information may correspond to entry information that is provided with a service or data content.

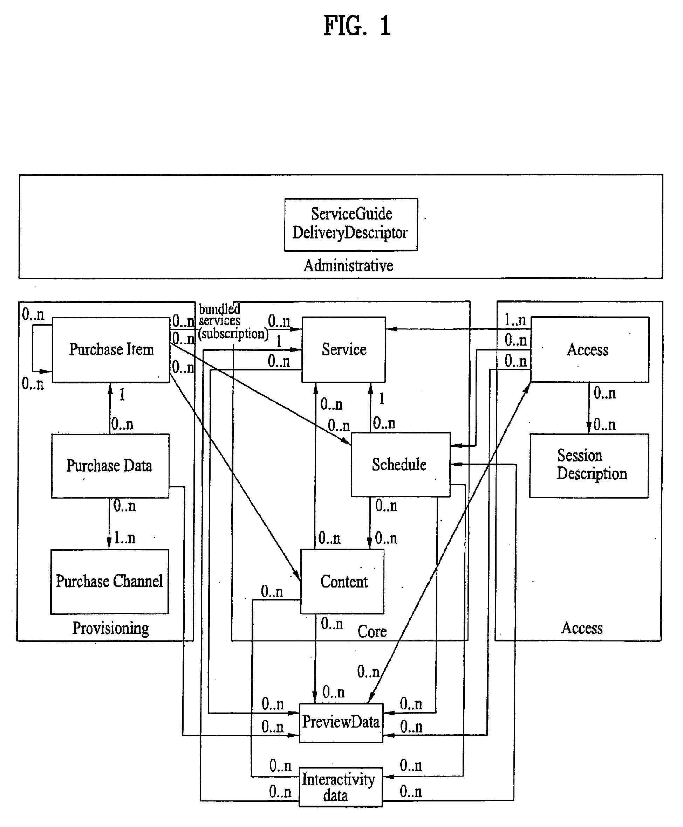

FIG. 1 illustrates an exemplary structure of service guide information. The exemplary service guide information will now be described in detail with reference to FIG. 1. The service guide information may include 4 types of structure information as shown in FIG. 1. Each structure information may include information of a lower level. Hereinafter, the lower level will be referred to as a fragment level. The arrows shown in FIG. 1 respectively indicate reference directions between each information. For example, when an arrow points from fragment A to fragment B, this indicates that fragment A refers to fragment B. More specifically, referring to FIG. 1, an access fragment refers to a service fragment. And, the numbers marked on the arrows corresponding to each fragment represent the number of reference information, which may be referred to by a respective fragment. Herein, the numbers "0, ..., n" indicate that 0 to *n* number of reference information exist (wherein *n* is an integer). Furthermore, "1, ..." indicates that at least one or more reference information exist.

Referring to FIG. 1, an administrative structure information may include a descriptor (hereinafter referred to as the service guide delivery descriptor (SGDD)), which describes delivery information that nay be delivered to a terminal. Accordingly, the terminal may be able to swiftly acquire a grouped fragment or meta data from the descriptor information.

A provisioning structure information includes each of a PurchaseItem fragment, a PurchaseData fragment, and a PurchaseChannel fragment. The referential relation between the fragments included in the provisioning structure information is illustrated in FIG. 1.

The PurchaseItem fragment includes information on a service bundle, which corresponds to more than one service, on the purchase of one or more content item, on free-of-charge supply, and on a subscription request. The PurchaseData fragment includes price information on the corresponding purchase item. The PurchaseChannel fragment may include information on an accessing entity with respect to one or more service content item.

A core structure information may include a service fragment, a schedule fragment, and a content fragment. The service fragment may correspond to an information unit describing a content item. The schedule fragment may correspond to an information unit having the schedule of a content item defined therein, the schedule of the content item corresponding to a time frame during which the content item can be used. The content fragment corresponds to an information unit including detailed information on each content.

An access structure information may include an access fragment and a session description fragment. Herein, the access fragment corresponds to an information unit including information on how a service can be accessed. And, the session description fragment corresponds to an information unit providing session information for accessing a service or content item.

Finally, the service guide information may include a PreviewData fragment and an InteractivityData fragment. The PreviewData fragment corresponds to an information unit including information that can display an abstract of the service or content to the user. And, the InteractivityData fragment corresponds to an information unit including information that is used to provide an interactive service to the user.

The service guide information provides information on usable services to the user. When the user selects a service based upon the service guide information received by the terminal, the terminal may select a flow that can receive a service or content. Detailed individual information on the service guide information delivered to the terminal may be transmitted (or delivered) by constant data units. Hereinafter, the transmission data unit (or transmission unit) will be referred to as a service guide delivery unit (SGDU). Therefore, each of the above-described fragment information may be divided and transmitted to each of the one or multiple service guide delivery units. The terminal first receives a descriptor including the transmission information of the service guide information (*e.g.*, a service guide delivery descriptor (SGDD)).

The terminal may receive a descriptor including the transmission information of the service guide information through a first channel. Hereinafter, the first channel through which the terminal receives the descriptor including the transmission information of the service guide information will be referred to as an announcement channel, for simplicity.

The service guide delivery descriptor (SGDD) includes entry information that can obtain a service guide delivery unit, which is the transmission data unit of the service guide information. The terminal may either use the entry information so as to receive a service guide delivery unit, which is the detailed data of the service guide information, through a second channel, or access the second channel so as to receive the data configuring the service guide information. Hereinafter, the second channel through which the terminal receives the data configuring the service guide information will be referred to as a delivery channel, for simplicity. In the description of the present invention, the terms "announcement channel" and "delivery channel" will be used for the purpose of conceptually differentiating the channel through which the service guide delivery descriptor (SGDD) is transmitted from the channel through which the service guide delivery unit (SGDU).

The terminal may obtain transmission information (*e.g*., SGDD) of the service guide information from a broadcast channel or an interactive channel. A bearer bearing the above-described service guide delivery descriptor (SGDD) may vary depending upon the broadcast and communication system. The terminal may receive and access a service and content from one or more service guide delivery descriptors.

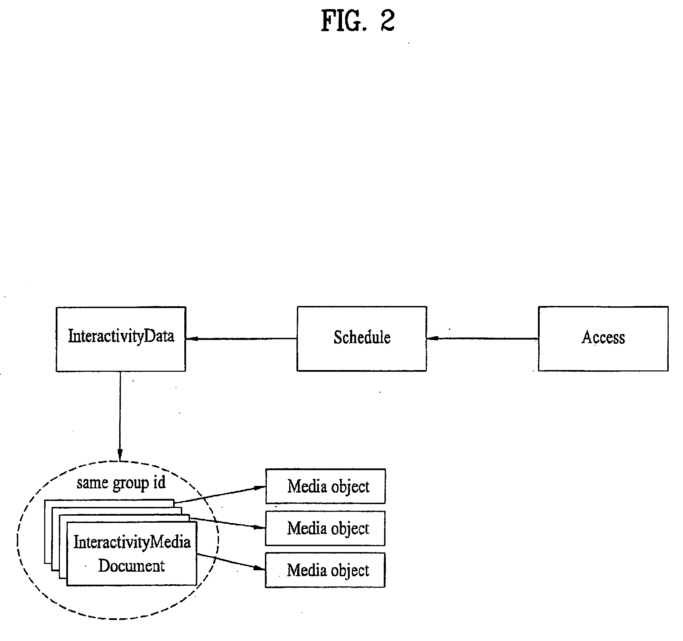

FIG. 2 illustrates an example of receiving a media object from the service guide information shown in FIG. 1. The media object refers to a content media unit, such as a video content or an audio content. As described above, the InteractivityData fragment may include information enabling a broadcast content to be provided to the user through an interactive channel as well as an interactive content at its corresponding service. For example, the user may submit a vote on a television program through the InteractivityData fragment or obtain a data content associated with the broadcast content.

A schedule fragment may include reference information on the InteractivityData fragment. Herein, the schedule fragment includes schedule information of diverse list information of the media object being transmitted as a file stream. Hereinafter, the list information of the media object will be referred to as an interactive media documents (IMD). Also, an access fragment may include reference information on the schedule fragment. Herein, the access fragment carries access point information, at which point a content scattered in accordance with a broadcasting or transmission schedule of the content can be accessed. The list information of the media object may be received through access point information of the broadcast channel or interactive channel. Herein, the lists of media objects include list information of media objects, such as video or audio objects, and such media objects may also be transmitted as broadcast streams.

The media object lists may be grouped to at least one or more logical unit. Herein, the same group may have the same identifier. The lists of media objects included in groups having the same specific identifier may be received through a single channel. For example, the lists of multiple media objects (i.e., interactive media documents) shown in FIG. 2 may include a list of groups having the same identifier. Herein, a single identifier may be assigned to the identical groups. The lists of media objects having the same group identifier assigned thereto are transmitted to the same file delivery session. In this case, even if the media objects listed in the list of media objects are different from one another, as long as the media object lists have the same group identifier, the media object lists may be transmitted (or delivered) through the same transmission session (*i.e*., the same channel).

The terminal may receive services including the media objects associated with the media object lists. In this case, the terminal receives each media object and the media objects included in each corresponding media object list. However, if the terminal simultaneously receives the media object list and the media object (*i*.*e*., if the terminal receives the media object list and the media object through the same transmission path at the same time), the terminal may also receive media objects that cannot be displayed. As result, unnecessary media objects (*i*.*e*., even the media objects that cannot be supported by the terminal) are all received by the terminal. Accordingly, the terminal may excessively use transmission frequency bandwidth for receiving the unnecessary media objects and may also undergo a delay period for receiving the media objects.

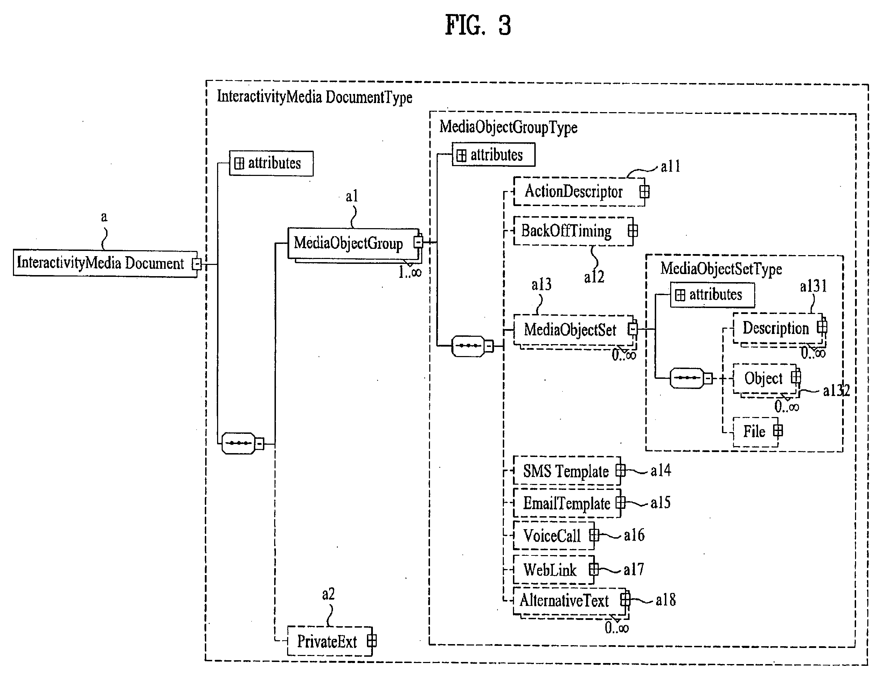

Hereinafter, a method for efficiently receiving a media object of the service guide information according to an embodiment of the present invention will be described in detail. If the terminal is capable of accessing a media object through a transmission channel other than the transmission channel used for receiving the media object lists, the terminal may selectively receive media objects. A detailed description of the same will now be presented with reference to FIG. 3.

FIG. 3 illustrates an exemplary structure of media object list information. FIG. 3 illustrates an example of defining the media object list information (which is indicated as "InteractivityMediaDocument") as type information having an attribute. The media object list information may include media data of various formats. For example, the media object list information may include xhtml files, still images, e-mail templates, short message service (SMS) templates, multimedia messaging system (MMS) templates, and so one.

More specifically, the media object list information (a) may include a plurality of MediaObjectGroups (a1). Each media object group (MediaObjectGroup) may include multiple MediaObjectSets (a13) (*i.e*., 0 to n number of MediaObjectSets, wherein n is an integer). In each media object set, media objects may be grouped to a file bundle. The MediaObjectGroup (a1) includes file delivery information required for receiving each MediaObjectSet and responses to the respective MediaObjectSet. When receiving the file bundle, the terminal ignores (or disregards) the non-supportable media sets, and may fail to store the corresponding media sets.

An action descriptor (ActionDescriptor) element (a11) included in the MediaObjectGroup (a1), describes the operation of the terminal, when media objects are inputted to a user terminal. For example, input time, display of media object on the terminal, and elements enabling the terminal to send response messages through the interactive channel may be included in the ActionDescriptor element (a11). A BackoffTiming (a12) includes information determining details associated with a response action time, which is provided by the terminal to the user with respect to the transmission of the media object. Although an SMS template (a14), an E-mail template (a15), a voice call (a16), and a Weblink (a17) are not included in each of the MediaObjectSets, the SMS template (a14), the E-mail template (a15), the voice call (a16), and the Weblink (a17) correspond to elements describing the media objects defined as formats other than those of the MediaObjectSets and the information associated with such media objects.

For example, the SMS template (a14) corresponds to an object associated with text messages (or SMS) and also corresponds to an object that can transmit and/or receive text information with the user. Each of the E-mail template (a15), the voice call (a16), and the Weblink (a17) describes information on each media object using the media objects associated with e-mails, phone calls, and weblinks. An AlternativeText (a18) includes information enabling text to be displayed on a terminal, which does not support other media objects. An InteractivityMediaDocument may also include a private exit (PrivateExt) element (a2), which may include extension information.

The MediaObjectSet (a13) will now be described in detail. The MediaObjectSet (a13) includes information on a media object included in the media object group (MediaObjectGroup). Among the elements of the MediaObjectSet (a13), additional description information on the MediaObjectSet is included in a description element (a131), wherein such information may be written (or described) in a language format. An object element (a132) describes each of the objects included in the MediaObjectSet. Furthermore, a file element may be included in the MediaObjectSet (a13). Herein, when a MediaObjectSet file is transmitted, the file element may be used when transmission is performed in an asynchronous layered coding (ALC) mode and not in a file delivery over unidirectional transport (FLUTE) mode.

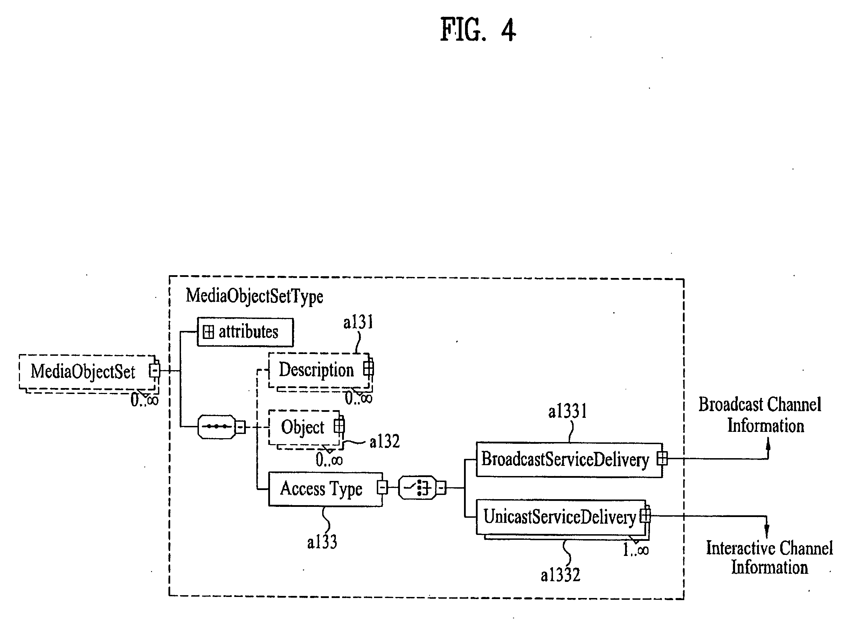

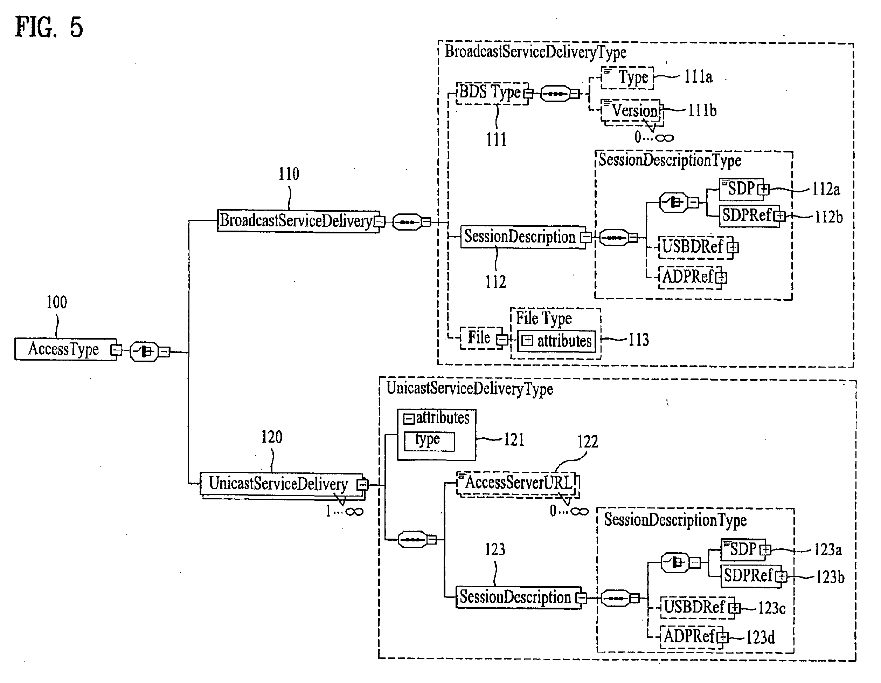

FIG. 4 illustrates another example of a media object set shown in FIG. 3. Instead of the file element, the MediaObjectSet (a13) may include information associated with the transmission of the corresponding MedsaObjectSet. Referring to FIG. 4, the information associated with the transmission of the corresponding MediaObjectSet is defined as an AccessType element. Based upon the transmission mode of the media object, the AccessType element may include a broadcast service delivery (BroadcastServiceDelivery) element (a1331) and a unicast service delivery (UnicastServiceDelivery) element (a1332). Herein, when the media object is received through a broadcast channel, the BroadcastServiceDelivery element (a1331) includes information associated with the transmission. For example, when the media object is transmitted using ALC or FLUTE, the BroadcastServiceDelivery element (a1331) may include information associated with the transmission. Furthermore, when the media object is transmitted through an interactive channel, the UnicastServiceDelivery element (a1332) may include information associated with the corresponding transmission. A detailed description of the same will be presented with reference to FIG. 5.

FIG. 5 illustrates an exemplary structure of the AccessType element associated with the MediaObjectSet. The AccessType element 100 includes at least one of the BroadcastServiceDelivery element 110 and the UnicastServiceDelivery element 120. Herein, the BroadcastServiceDelivery element 110 indicates that an object that is to be accessed may be transmitted through a broadcast network. And, when data content is transmitted through the interactive channel, the UnicastServiceDelivery element 120 indicates which server or which protocol is used for the transmission of the data content.

The BroadcastServiceDelivery element 110 includes a BDSType element 111, a SessionDescription element 112, and a FileDescription element 113. The BDSType element 111 carries a type 111a designating a broadcast distribution system (BDS). Herein, the type 111a may designate broadcast or communication systems, such as an IP datacast over digital video broadcasting-handheld (IPDC over DVB-H) system, a 3^{rd} generation partnership project multimedia broadcast/multimedia service (3GPP MBMS) system, and a 3GPPP2 broadcast multicast service (3GPP2 BCMCS) system. Further, the BDSType element 111 may also include version 111b information of each type 111a.

The SessionDescription element 112 information describing the session used by the terminal for accessing a data content or reference information. The SessionDescription element 112 may include an SDP element 112a, an SDPRef element 112b, a USBDRef element 112c, and an ADPRef element 112d. The SDP element 112a describes a session corresponding to the SDP format [RFC 4566], and the SDPRef element 112b may include reference information on the session description corresponding to the SDP format [RFC 4566]. Each of the USBDRef element 112c and the ADPRef element 112d respectively includes separately determined session description information. (Herein, USBDRef indicates a protocol referred to as a user service bundle description, and ADPRef indicates a protocol referred to as an AssociateDeliveryProcedure for file and stream distribution.) Furthermore, the FileDescription element 113 may be used for describing file metadata of a file transmission session.

Conversely, the UnicastServiceDelivery element 120 includes an attribute that may be referred to as a type 121. The type 121 is used for defining a transmission mechanism, which is used for accessing data contents. Mechanisms such as hypertext transfer protocol (HTTP), wireless application protocol (WAP) 1.0, WAP 2.X, real-time streaming protocol (RTSP), file delivery over unidirectional transport (FLUTE) over unicast, and so on, may be defined based upon a type 121 value. The UnicastServiceDelivery element 120 includes an AccessServerURL element 122, a SessionDescription element 123, and a ServiceAccessNotificationURL element (not shown). The AccessServerURL element 122 includes service link information (i.e., service link URL), which the terminal may be provided with (or serviced) through a network capable of two-way communication. For example, the AccessServerURL element 122 may include an HTTP URL, which point to a downloadable content, or an RTSP URL, which points to a streaming server for starting a streaming session. The SessionDescription element 123 of the UnicastServiceDelivery element 120 is identical to the SessionDescription element 112 of the BroadcastServiceDelivery element 110. Therefore, a detailed description of the same will be omitted for simplicity.

When an AccessType element including information associated with transmission, as shown in FIG. 4, is included in the information describing the MediaObjectSet, instead of a File element shown in FIG. 3, and when a data content including a media object is transmitted, the information associated with the corresponding transmission may be included in detail, thereby being transmitted. When the AccessType element shown in FIG. 4 is included in the MediaObjectSet, as shown in FIG. 3, access information for each media object set may be described. Furthermore, although it is not shown in FIG. 5, when the AccessType element is included in the same level as the MediaObjectGroup (*i.e*., when the AccessType element is positioned at a directly lower level of the InteractivityMediaDocuments), access information on the MediaObjectGroup may be described.

Therefore, even the media objects included in the multiple InteractivityMediaDocuments may be transmitted as media object based upon the access information and as separate transmission information, respectively. Accordingly, when the terminal receives media object lists through a single channel, media objects included in the media object lists may be separately received through different channels and stored. Thus, the usage of resources and frequency bandwidth, which are used for receiving media objects, may be reduced, thereby enabling the media objects to be received with more efficiency.

A digital broadcast system transmitting and receiving the above-described service guide information will now be described in detail. As described above, the terminal receives a service guide delivery descriptor (SGDD). The terminal may receive service guide delivery units, which correspond to service guide information, based upon the service guide delivery descriptor. Among the service guide information, the terminal may refer to the transmission information for each media object associated with the corresponding media object list. Herein, various types of systems may be used as the bearer bearing (or delivering) the service guide information. In the description of the present invention, a broadcast system will be proposed as the bearer of the service guide information. Accordingly, this is to facilitate the understanding of the delivery process, even when the process is used in a different embodiment to transmit (or deliver) service guide information and the respective service guide delivery descriptor of a different broadcast and/or communication system.

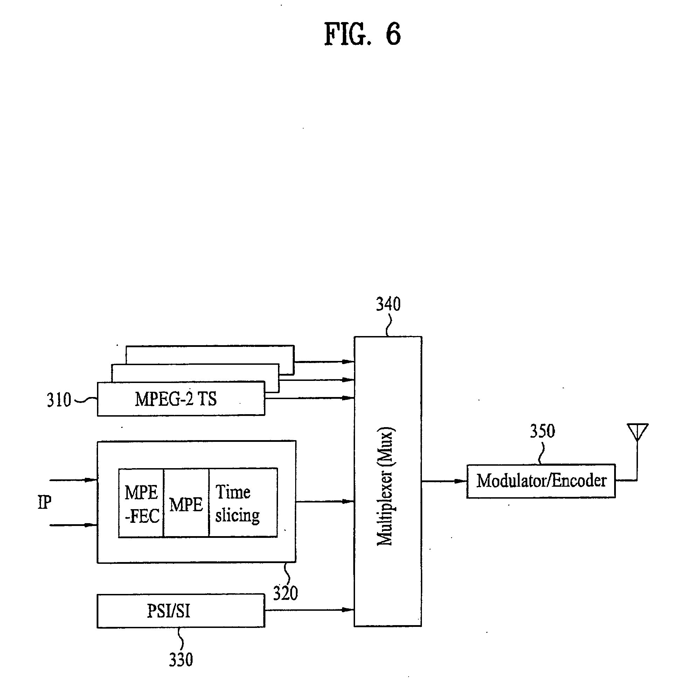

FIG. 6 illustrates a transmitting system transmitting service information according to an embodiment of the present invention. A transmitting system for transmitting service guide information according to an embodiment of the present invention will be described with reference to FIG. 6. In the example shown in FIG. 6, it is assumed that the service guide information is transmitted (or delivered) through a broadcast signal.

The digital broadcast transmitting system shown in FIG. 6 includes an encoding unit 310, 320, and 330, a multiplexer 340, and a modulator/encoder 350. The encoding unit includes a first encoder 310, a second encoder 320, and a third encoder 330. The first encoder 310 may encode audio, video, and data contents (*e.g*., MPEG-2 transport streams) based upon a transmission/reception protocol.

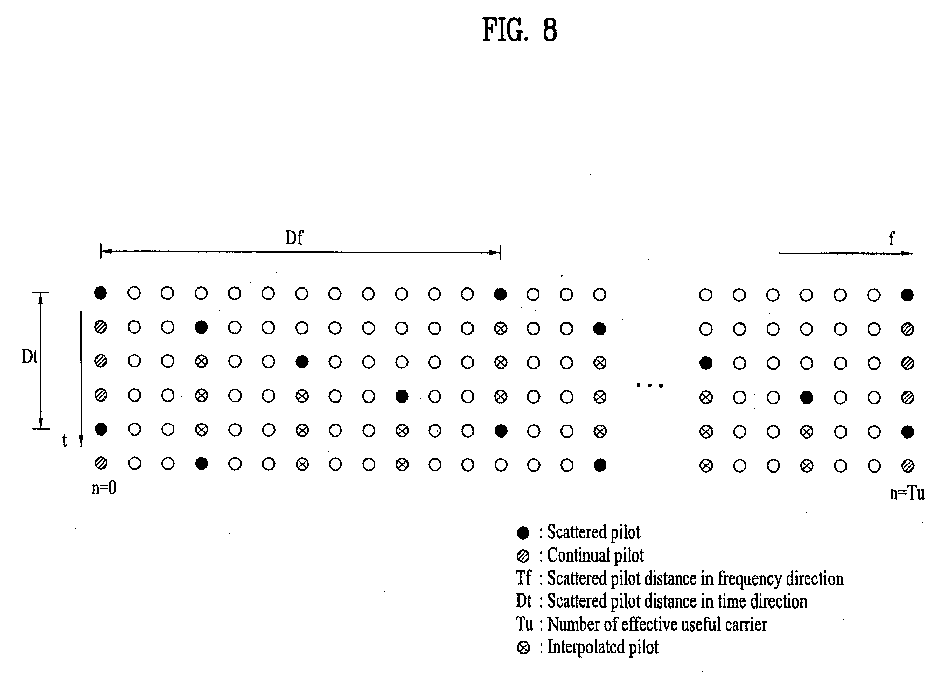

The second encoder 320 may encode data including service guide information in an IP datagram format. The IP datagram refers to a signal processing format sending a signal to an internet protocol (IP) packet. Herein, the IP datagram includes a header including an IP address, and a data container transmitting information. In the packet-unit IP datagram, the data container may include video data, audio data, and service guide information data. More specifically, the example shown in FIG. 8 may perform an internet protocol (IP) datacasting method in order to transmit data. Herein, the IP datacasting method divides and compresses a video signal, an audio signal, and a data signal in packet units, thereby outputting the compressed data. The IP data are encapsulated by multi-protocol encapsulation (MPE), thereby being embedded to the MPEG-2 transport stream (TS). Herein, forward error correction (FEC) may be added to the MPE method, so as to process data with multi-protocol encapsulation-forward error correction (MPE-FEC). By positioning a transmission signal processed with MPE-FEC, a carrier-to-noise (CN) ratio of the transmission signal may be enhanced. MPE-FEC data including FEC or MPE data not including FEC may be included in the IP datagram format transmission data.

The second encoder 320 may encode the service guide information to an IP datagram format. The second encoder 320 may encapsulate the IP datagram included in the service guide information to MPE and then multiplex the processed data using a time-slicing method, so as to reduce power consumption. The multiplexed signal is converted to a transport stream, thereby being multiplexed with an MPEG-2 TS packet, which carries a video or audio signal. The service guide information is divided into service guide delivery units (SGDUs) so as to be included in an IP datagram and an MPEG-2 TS, thereby being transmitted.

The service guide information may include an interactivity fragment so that a terminal can obtain a content from an interactive channel.

The interactivity fragment may include media object list information. The media object list information may include the same format of access information as illustrated in figs.2 to 5.

Therefore, the media objects received depending on the media object list information do not transmitted with the media object list information, and can be transmitted through a separate path different from a path through which the media object list information is transmitted.

The access information of media object in the media object list information can be set along with media objects or media object groups.

The third encoder 330 may encode packets encoded by the first encoder 310 or the second encoder 320 (*e.g*., multiplexing information of stream packets associated with a program or service). The multiplexing information includes table information on program specific information/service information (PSI/SI). The table information encoded by the third encoder 330 may include packet identification (PID) including the IP datagram being encoded by the second encoder 320 and IP/MAC notification table (INT) having mapping information of an IP address. The third encoder 330 may encode INT information, which can acquire the service guide transmission information (or service guide delivery descriptor (SGDD)). Accordingly, the terminal receives service guide delivery information (SGDD) from the service guide entry information and obtains a service or content by using the service guide delivery information.

The multiplexer 340 multiplexes each of the transport packets outputted from the first encoder 310, the second encoder 320, and the third encoder 330, thereby outputting the multiplexed data.

When the multiplexer 340 multiplexes the packet data encoded by the first encoder 310, the second encoder 320, and the third encoder 330 and outputs the multiplexed packet data, the modulator/encoder 350 modulates the multiplexed signal and encodes the modulated signal. Thereafter, the modulator/encoder 350 may transmit the modulated signal as a radio frequency (RF) signal. The modulator/encoder 350 may adopt various modulation and encoding methods in accordance with a wide range of broadcast systems. For example, ATSC type or ISDM-T type transmission methods may be used based upon DMB-type, DVB-H type, and VSB-type modulation methods.

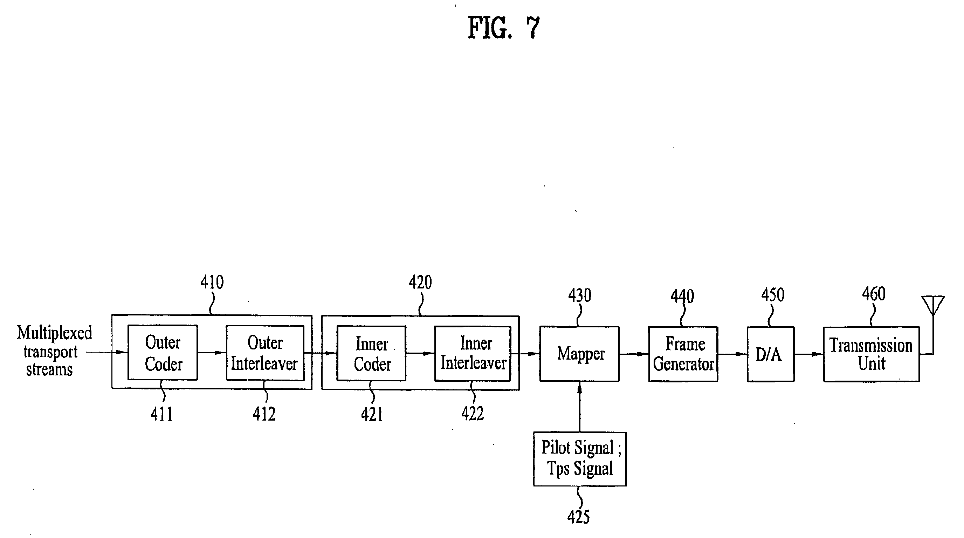

FIG. 7 illustrates a modulator/encoder shown in FIG. 6. Referring to FIG. 7, the modulator/encoder of FIG. 6 may use modulation and encoding methods, such as a digital video broadcasting-terrestrial/handheld (DVB-T/H) method.

A first encoder 410 includes an outer coder 411 and an outer interleaver 412. In order to enhance the transmission performance for transmitting the multiplexed signal, the first encoder 410 may encode and interleave each set of the multiplexed data. For example, the first encoder 410 may use a Reed-Solomon (RS) coding method for the outer coding process and a convolutional interleaving method for the interleaving process.

A second encoder 420 includes an inner coder 421 and an inner interleaver 422. The inner coder 421 and the inner interleaver 422 performs coding and interleaving processes once again on the signal that is to be transmitted, as preparation for any possible occurrence of errors in the transmission signal. The inner coder 421 may encode the transmission signal in accordance with a punctured convolution code. And, for the interleaving method, the inner interleaver 422 may adopt a native or in-depth interleaving method in accordance with the use of a memory in a 2k, 4k, and 8k transmission mode.

A mapper 430 takes into consideration a pilot signal, generated based upon the transmission mode, and a transmission parameter signal (TPS), which are generated by a system signal generator 425, thereby mapping the transmission signal in accordance with a 16QAM mode, a 64QAM mode, and a QPSK mode.

A frame generator 440 aligns (or positions) the mapped signal to a frame, thereby modulating the frame using an orthogonal frequency division multiplexing (OFDM) method. The frame generator 440 generates a frame having a protection section inserted in a data section, which includes the modulated signal. Each frame includes 68 OFDM symbols, and 4 frames may be grouped to form a super frame. For example, when the transmission mode is 8k, one symbol includes 6817 carriers. And, when the transmission mode is 2k, one symbol includes 1705 carriers. The protection section corresponds to a cyclic continuation copying the data of the data section. Herein, the length of the protection section may vary depending upon the transmission mode. Each of the OFDM frames includes a scattered pilot signal, a continual pilot signal, and a TPS carrier. An example of a signal frame generated by the frame generator of FIG. 7 will be described with reference to FIG. 8.

A digital-to-analog converter 450 converts the digital type broadcast signal, which includes a protection section and a data section, to an analog signal. And, a transmitting unit 460 may transmit the analog signal converted by the digital-to-analog converter 450 as an RF signal. Therefore, the encoded service guide information may be transmitted in accordance with the example shown in the transmitting system of FIG. 7.

FIG. 8 illustrates an exemplary signal positioning based upon a frame created by a frame generator shown in FIG. 7. Referring to FIG. 8, Tu indicates the number of effective useful carrier wave frequencies, Dt represents a distance between scattered pilots within the time axis (or direction), and Df indicates a distance between scattered pilots within a frequency axis (or direction). In the frequency domain, the distance between the scattered pilots (Df) decides a delay range of an estimatable ghost. FIG. 8 indicates the signal generated from the frame generator to a position of a pilot that is to be interpolated.

Therefore, when receiving a signal positioned as described above, time interpolation is performed at the pilot position, thereby positioning the symbol so that a pilot pattern is formed at a cycle of 4 inputted symbols. More specifically, by positioning the same scattered pilot signal in an initially inputted symbol point (t=1) and a symbol inputted at a point where t=5, the terminal receiving the signal may perform time interpolation from the position of the scattered pilot signal on symbol received at points t=2, 3, and 4.

Additionally, since the symbol inputted at t=6 has the same scattered pilot pattern as the symbol inputted at t=2, the terminal receiving the signal may perform time interpolation of signals of t=3, 4, and 5, within a scattered pilot position of the symbol inputted at t=6 and the symbol inputted at t=2.

Furthermore, during signal reception, when time interpolation is performed after a symbol is received at t=7 using the above described method, scattered pilot signals are positioned at each 4 subcarrier wave positions for the symbol inputted at t=4. Therefore, the distance between the scattered pilot signals in the frequency domain of the symbol inputted at t=7 is reduced to 1/4 of the distance between the initial scattered pilot signals. And, the symbol inputted at t=4 is set-up to have a pattern positioning the scattered pilot signals for each set of 4 sub-carriers. Accordingly, the terminal receiving the signals may be able to process the signals just like when a larger number of pilot signals is positioned in a symbol. Therefore, when the continual pilot signal and the scattered pilot signal are used to transmit a signal, a channel may be adaptively compensated based upon a receiving channel status during signal reception.

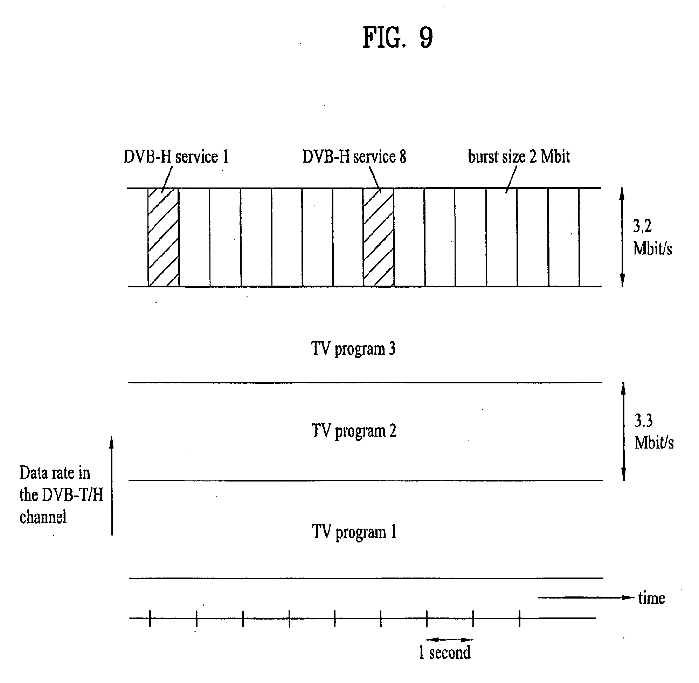

FIG. 9 illustrates an example of broadcast program, contents, and data being transmitted through a channel. In the transmission system shown in FIG. 6 and FIG. 7, a time-slicing method is adopted in a DVB-H system, thereby enabling a service that can be transmitted through a common channel of the DVB-T and DVB-H systems to be transmitted. A program may be transmitted depending upon the channel corresponding to each of the DVB-T system and the DVB-H system. And, when using the DVB-H system, each service may be time-division multiplexed using the time-slicing method and, then, transmitted. Data content including video/audio data and service guide information are included in an IP datagram of the DVB-H system so as to be converted to MPE or MPE-FEC, thereby being transmitted as an MPEG2-TS embedded with MPE or MPE-FEC.

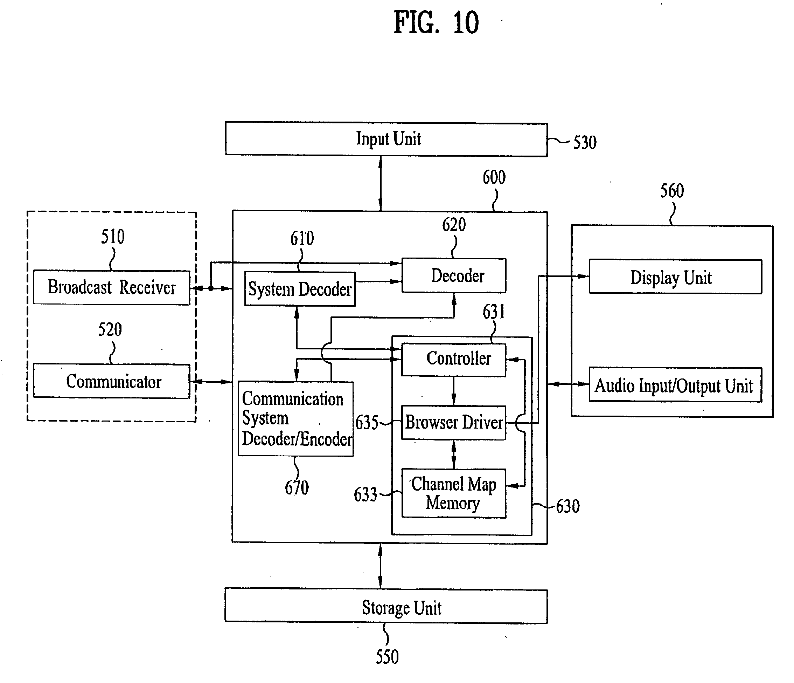

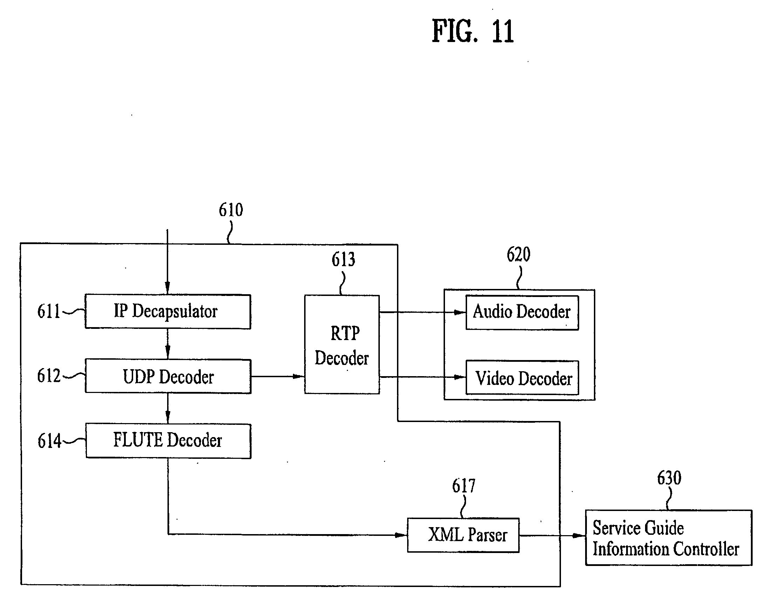

FIG. 10 and FIG. 11 respectively illustrate receiving systems receiving service guide information according to the present invention. Referring to FIG. 10 and FIG. 11, the apparatus for processing service guide information will now be described in detail. The apparatus for processing service guide information includes a receiving unit, an input unit 530, a storage unit 550, a display unit 560, and a control unit 600. The receiving unit may include a broadcast receiver 510 and a communicator 520. The broadcast receiver 510 receives signals through a broadcast channel, and the communicator 520 receives signals through an interactive channel and also transmits signals to the interactive channel. For example, a channel that is in interaction with the communicator 520 may correspond to a wired/wireless channel capable of two-way data communication.

The broadcast receiver 510 receives a broadcast signal, demodulates the received signal, and outputs the demodulated signal. Herein, the broadcast receiver 510 may include a tuner for selecting a broadcast signal that is received by a DVB-H mode, and a demodulator demodulating the DVB-H type broadcast signal using the OFDM method. The broadcast signal received by the broadcast receiver 510 includes service guide information or a service guide delivery descriptor (SGDD). And, interactivity fragment of the service guide information as illustrated in figs. 2 to 5, may have the media object list information including access information, which permits a terminal to access the media object through a first channel and the media object list information through a second channel.

The communicator 520 may transmit and receive signals through an interactive channel capable of two-way communication. When receiving a broadcast signal through the interactive channel, the communicator 520 demodulates the received signal based upon the modulation method of the communication system, thereby transmitting the demodulated signal. And, when the communication system decoder/encoder 670 outputs an encoded signal, the communicator 520 modulates the outputted signal based upon the modulation method of the communication system to which the signal is to be transmitted, thereby transmitted the modulated signal. For example, the communicator 520 outputs a signal allowing access to a service, which provides service guide information through an interactive channel based upon a command of the control unit 600. Thereafter, the communicator 520 may receive the service guide information transmitted by the corresponding server.

The control unit 600 may include a system decoder 610, a decoder 620, a service guide information controller 630, and a communication system decoder/encoder 670. The control unit 600 controls the operation of the function blocks shown in FIG. 10, such as the receiving unit, the input unit 530, the storage unit 550, and the display unit 560, and also processes control commands received from the user. When the broadcast receiver receives a signal through the broadcast channel, the system decoder 610 may decode the received signal based upon the coding method of the transmitting/receiving system. When the broadcast receiver 510 demodulates and outputs the broadcast signal, the system decoder 610 decodes the outputted signal, so as to acquire the service guide information. The system decoder 610 may decode the received signal based upon the coding method of the transmitting system so that the terminal can obtain the service guide information including the access information of the media object list information disclosed in figs. 2 to 5. The system decoder 610 will be described in detail with reference to FIG. 11.

The control unit 600 may include the communication system decoder/encoder 670 so that signals may be received and transmitted through the interactive channel. The communication system decoder/encoder 670 may either encode a signal that is to be transmitted through the interactive channel or decode a signal that is received from the communicator 520 through the interactive channel. For example, when the communicator 520 receives a signal including service guide information through the interactive channel, so as to demodulate the received signal and output the demodulated signal, the communication system decoder/encoder 670 may decode the outputted signal and output the service guide information to the service guide information controller 630 or the decoder 620. The service guide information received by the communicator 520 may have the media object list information including the access information of the media object disclosed in figs. 2 and 5.

The communication system decoder/encoder 670 may encode or decode IP datagram type signals. For example, the communication system decoder/encoder 670 receives a signal demodulated by the communicator 520. Then, the communication system decoder/encoder 670 may either decode the received signal to an IP datagram format and output the decoded signal, or encode the IP datagram format signal, thereby outputting the encoded signal to the communicator 520. More specifically, when the apparatus for processing service guide information receives service guide information through a broadcast channel, the communication system decoder/encoder 670 may encode a signal, which permits the terminal to access a server through an interactive a channel. Herein, the server can provide the media object list information including access information of the media object disclosed in figs. 2 and 5. Subsequently, the communicator 520 may decode the service guide information received from the accessed server based upon the communication system.

The decoder 620 may decode each of the video data, audio data, and data information decoded by the system decoder 610 and the communication system decoder/encoder 670, respectively. The decoder 620 may include a video decoder, an audio decoder, and a data decoder. For example, the video decoder may decode and output H.264 type video data, and the audio decoder may decode and output AC-3 type and/or AAC+ type audio data. Also, the decoder 620 may also include a data decoder (not shown) that can decode PSI/SI table format program information/service information. For example, the decoder 620 may decode signals based upon table information, such as a program associate table (PAT), a program map table (PMT), and a network information table (NIT), from the signal decoded by the system decoder 610. Alternatively, the decoder 620 may decode a broadcast signal based upon data broadcasting.

The decoder 620 may parse an IP/MAC notification table (INT), which is a table information, from the PMT. The INT includes mapping information between an IP address of an IP stream within the transport stream and a PID of the transport stream. When the decoder 620 parses the INT to acquire service guide entry information, the acquired service guide entry information may be outputted to the service guide information controller 630. Therefore, the apparatus for receiving service guide information may use the entry information to acquire service guide information through the broadcast channel or the interactive channel. In this case, the access information of the media object included in service guide information which the decoder 620 parse, is disclosed in figs. 2 to 5. For example, the service guide information may include access information by which a terminal can access each of the media objects respectively listed in the media object list information

The service guide information controller 630 receives service guide delivery descriptor decoded by the system decoder 610 or the communication system decoder/encoder 670. Then, the service guide information controller 630 uses the service guide delivery descriptor, so as to enable the apparatus for processing service guide information to receive service guide information. For example, the service guide information controller 630 may control the system decoder 610, so that the system decoder 610 can receive service guide information through the broadcast channel, based upon the service guide delivery descriptor received by the system decoder 610. Alternatively, the service guide information controller 630 may control the communication system decoder/encoder 670, so that the communication system decoder/encoder 670 can receive service guide information through the interactive channel. The processes, which the apparatus for processing the service guide information receives the service guide information through an interactive or broadcast channel, were disclosed above in details.

Furthermore, the communicator 520 may modulate a signal through the interactive channel and output the modulated signal, thereby receiving the service guide information from the corresponding server.

The service guide information controller 630 may include a controller 631, a channel map memory 633, and a browser driver 635. The controller 631 extracts channel map information from the service guide information and stores the extracted channel map information in the channel map memory 633. Additionally, the controller 631 controls a session and also controls the browser driver 635, which operates an application, thereby displaying the received or stored service guide information.

The apparatus for processing service guide information may store the received service guide information in the storage unit 550. The storage unit 550 may store service guide information, files transmitted as IP datagrams, and content data. The storage unit 550 may also store data prior to or after being decoded by the decoder 620. The input unit 530 receives a control command inputted by the user and may output the received control command to the control unit 600. The display unit 560 may output the audio or video signal outputted from the control unit 600. Furthermore, an application operated by the service guide information controller 630 may output the service guide information as image and sound through the display unit 560.
Therefore, by using the application for the service guide information, the user may download files using the application for the service guide information or may be provided with web services or service guide information.

When the service guide information is acquired from a terminal that can receive DVB-H signals, the following process may be applied. When booting of the terminal is initiated, a list of transmission frequencies within the current network may be obtained from a network information table (NIT) among the multiplexing information included in the broadcast signal. When the terminal tunes a receiving frequency, a stream providing the broadcast service and mapping information of an IP flow may be acquired. The NIT includes identification information of each IP platform. Herein, each IP platform includes information identifying the packet, in which the INT is positioned, from the broadcast stream (in order to do so, reference may be made to PAT and PMT information). The INT provides information on an IP stream in the broadcast stream. Herein, the terminal acquires entry information of the service guide information from the IP stream, thereby obtaining the service guide delivery descriptor (SGDD).

When the terminal acquires a service guide delivery descriptor (SGDD), the terminal may acquire information describing the position of each service guide delivery unit, which corresponds to the transmission unit for the respective service guide information. Accordingly, when receiving service guide delivery units, the terminal then receives and displays service guide information so that a user can select a service or content. At that time, if terminal obtains the media object from the service guide information, the terminal obtains the media object list information of the interactivity fragment of the service guide information. And the media object list information may include the media object access information, which allows the terminal to access the media object through a transmission path separate from a path through which the media object list information is transmitted. Therefore, the terminal can receive only the media object, which the user wishes to receive, and reduce the usage of resources required for receiving the media object.

FIG. 11 illustrates a detailed view of the system decoder 610.

The system decoder 610 may decode the broadcast signal demodulated by the broadcast receiver 510 based upon the signal coding method. The system decoder 610 may process the service guide information demodulated by the broadcast receiver 510 as described below.

The system decoder 610 includes an IP decapsulator 611, a user datagram protocol (UDP) decoder 612, an RTP decoder 613, a file delivery over unidirectional transport protocol (FLUTE) decoder 614, and an XML parser 617.

The system decoder 610 may decode content data, which are being transmitted in real-time, using a decoding method respective of the system coding method. For example, the system decoder 610 may decode content data being transmitted in an IP datagram format and files including service guide information.

An example of the system decoder 610 decoding IP datagram format content data or service guide information will now be described in detail. Firstly, with respect to the content data, the IP decapsulator 611 refers to the header of the IP packet, so as to decapsulate the content data included in a payload of the IP packet. The UDP decoder 612 may decode content data, which are transmitted in real-time from the IP-decapsulated payload, based upon a user datagram protocol (UDP). The RTP decoder 613 may control the coding rate of the content data decoded by the UDP decoder 612 based upon an RTP control protocol (RTCP), so as to decode the decoded content data. The audio/video signal outputted from the RTP decoder 613 is respectively outputted to the decoder 620, which includes the audio decoder and the video decoder.

If the system decoder 610 decodes data on the file format service guide information, the data decoded by the UDP Decoder 612 are outputted to the FLUTE decoder 614.

The FLUTE decoder 614 decodes FLUTE format data (IETF RFC3926), thereby outputting files, such as binary data, image data, and text. The data decoded and outputted from the FLUTE decoder 614 may include the service guide information.

The XML parser 617 may decode an XML format file, which is outputted from the FLUTE decoder 614. The interactivity fragment of the service guide information, may have media object list information including media object access information, which permits_the terminal to receive media object lists through a single channel and the media objects included in the media object lists through different channels.

In case the communication system decoder/encoder 670 decides the received signal and displays the service guide information, the communication system decoder/encoder 670 may decode the service guide information file (e.g., XML file), which is transmitted based upon a protocol, such as HTTP within the IP datagram.

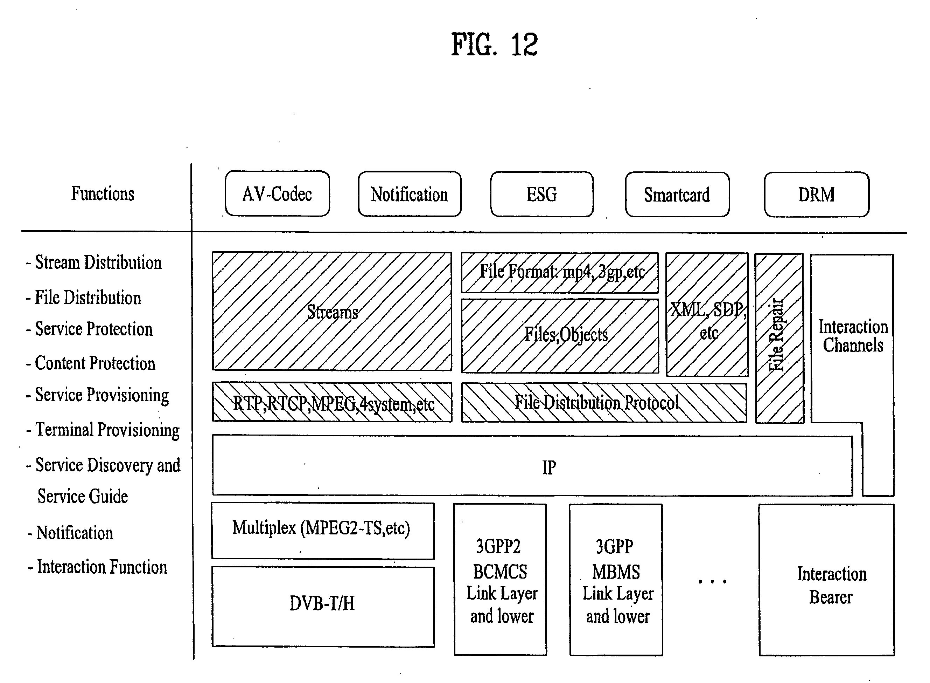

FIG. 12 illustrates an example of a protocol stack based upon which service guide information or service guide delivery descriptor is transmitted. The service guide information or service guide delivery descriptor may be received and transmitted via any bearer. For example, a delivery system may correspond to a digital video broadcasting-handheld/terrestrial (DVB-H/T) system, a 3^{rd} generation partnership project multimedia broadcast multicast service (3GPP MBMS) system, a 3GPP2 broadcast/multicast service (BCMCS) system, an IPTV system, and a DAB/DMB system.

When a file is transmitted through a broadcast channel, the transmission is generally based upon protocols, such as asynchronous layered coding (ALC) or file delivery over unidirectional transport (FLUTE). Alternatively, when the file is transmitted through an interactive channel, the transmission may be based upon protocols, such as HTTP, FLUTE, WAP, and so on. Furthermore, a stream transmission performed through one of a broadcast channel and an interactive channel may be based upon RTP. MPE or MPE-FEC type data or information based upon PSI/SI may be delivered to the stream. A streaming content based upon RTP may be decoded/encoded according to an H.264/AAC+ format. Meanwhile, the service guide information may be transmitted based upon an extensible markup language (XML) and a session description protocol (SDP). The XML corresponds to an object-oriented language. Accordingly, the service guide information may be transmitted by object units.

When the service guide information is transmitted in the DVB-H/T mode, the MPEG-2 TS maybe used as the data link layer. An IP protocol is generally used as the layer corresponding to a network layer. Nevertheless, voice services or text services of a communication system may be transmitted through the interactive channel. Streams, file format data or XML and SDP format data may be received and transmitted. And, by using the protocol shown in FIG. 12, the terminal may operate applications associated with audio/video data, service guide information, content protection, and so on.

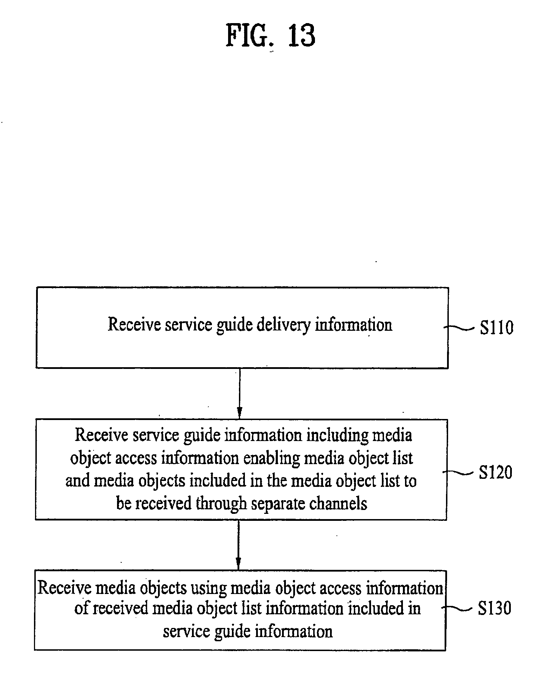

FIG. 13 illustrates a method for processing service guide information according to an embodiment of the present invention. The method for processing service guide information according to the present invention will now be described in detail with reference to FIG. 13. As described above, the service guide information may also be delivered by a bearer. A service guide delivery information (e.g., SGDD) is received (S110). In the description of the present invention, the DVB-H system has been proposed as the example of receiving service guide delivery information.

When receiving the service guide information using the service guide delivery information, service guide information including media object access information, wherein a media object list and media objects included in the media object list may be respectively received through separate channels, is received (S120). The media object list information including the access information, which allows the media object to be accessed separately from the media object list, has been described with reference to FIG. 2 to FIG. 5. Among the service guide information, the media object list information may be transmitted by an InteractivityData fragment.

Thereafter, the media object is received by using the media object access information of the received media object list information included in the service guide information (S130). Accordingly, the media object list information may be received through a first channel, and the media object indicated by the media object list information may be received through a second channel based upon the access information. Therefore, unnecessary media objects will not be received, while receiving the requested media objects, thereby reducing the usage of resources during the process of receiving the requested media objects.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A method for processing service guide information, comprising:
receiving (S110) electronic service guide delivery information;
receiving (S120) electronic service guide information including media object list information listing media objects, wherein the media object list information is grouped by a logical unit and each group is identified by an identifier, wherein at least one of groups identified by the same identifier is received through a same transmission path,
and wherein the media object list information includes media object access information, wherein the media object access information enables a corresponding media object to be selectively received through a separate transmission path different from a transmission path of the grouped media object list information; and
receiving (S130) the media object using the media object access information.

2. The method of claim 1, wherein the media object access information corresponds to access information on a single media object unit or to access information on a media object group, wherein multiple media objects are grouped to a single unit.

3. The method of claim 1, wherein the media object list information is included in an interactivity fragment of the service guide information.

4. The method of claim 1, wherein the media object access information includes an element describing information enabling the media object to be transmitted to a session of a broadcasting system, and an element describing information enabling the media object to be transmitted through an interactive channel to a session of an accessible system.

5. An apparatus for processing service guide information, comprising:
a receiving unit (510, 520) configured to receive electronic service guide delivery information and receive a signal carrying service guide information including media object list information listing media objects, wherein the media object list information is grouped by a logical unit and each group is identified by an identifier, wherein at least one of groups identified by the same identifier is received through a same transmission path, and wherein the media object list information includes media object access information, wherein the media object access information enables a corresponding media object to be selectively received through a separate transmission path different from a transmission path of the grouped media object list information;
a control unit (600) configured to decode the received signal and decoding the service guide information; and
a communicator (520) configured to receive the media object list information and media objects listed in the media object list information, based upon the media object access information of the decoded service guide information.

6. The apparatus of claim 5, wherein the media object access information corresponds to access information on a single media object unit or to access information on a media object group, wherein multiple media objects are grouped to a single unit.

7. The apparatus of claim 5, wherein the media object list information is included in an interactivity fragment of the service guide information.

8. The apparatus of claim 5, wherein the media object access information includes an element describing information enabling the media object to be transmitted to a session of a broadcasting system, and an element describing information enabling the media object to be transmitted through an interactive channel to a session of an accessible system.

9. The apparatus of claim 5, wherein the control unit (600) comprises:
an internet protocol (IP) decapsulator (611) configured to decapsulate an IP datagram including the service guide information;
a user datagram protocol (UDP) decoder (612) configured to decode the decapsulated data based upon the U DP;
a file delivery over unidirectional transport protocol (FLUTE) decoder (614) configured to decode the UDP-decoded data based upon the FLUTE; and
a parser (617) configured to parse the FLUTE-decoded data.

## Patentansprüche

1. Ein Verfahren zum Verarbeiten von Dienstführungsinformationen, Folgendes umfassend:
Empfangen (S110) elektronischer Dienstführungs-Lieferungsinformationen;
Empfangen (S120) elektronischer Dienstführungsinformationen, welche Medienobjektlisten-Informationen aufweisen, welche Medienobjekte auflisten, wobei die Medienobjektlisten-Informationen durch eine logische Einheit gruppiert werden und jede Gruppe durch eine Kennung identifiziert wird, wobei mindestens eine der Gruppen, welche durch die gleiche Kennung identifiziert wird, über einen gleichen Übertragungsweg empfangen wird,
und wobei die Medienobjektlisten-Informationen Medienobjekt-Zugangsinformationen aufweisen, wobei die Medienobjekt-Zugangsinformationen einem entsprechenden Medienobjekt ermöglichen, über einen separaten Übertragungsweg selektiv empfangen zu werden, welcher von einem Übertragungsweg der gruppierten Medienobjektlisten-Informationen verschieden ist; und
Empfangen (S130) des Medienobjekts unter Verwendung der Medienobjekt-Zugangsinformationen.

2. Verfahren nach Anspruch 1, wobei die Medienobjekt-Zugangsinformationen Zugangsinformationen über eine einzelne Medienobjekteinheit oder Zugangsinformationen über eine Medienobjektgruppe entsprechen, wobei mehrere Medienobjekte zu einer einzelnen Einheit gruppiert sind.

3. Verfahren nach Anspruch 1, wobei die Medienobjektlisten-Informationen in einem Interaktivitätsfragment der Dienstführungsinformationen eingeschlossen sind.

4. Verfahren nach Anspruch 1, wobei die Medienobjekt-Zugangsinformationen ein Element, welches Informationen beschreibt, welche dem Medienobjekt ermöglichen, zu einer Sitzung eines Rundfunksystems übertragen zu werden, und ein Element aufweisen, welches Informationen beschreibt, welche dem Medienobjekt ermöglichen, über einen interaktiven Kanal zu einer Sitzung eines zugänglichen Systems übertragen zu werden.

5. Vorrichtung zum Verarbeiten von Dienstführungsinformationen, Folgendes umfassend:
eine Empfangseinheit (510, 520), welche zum Empfangen elektronischer Dienstführungs-Lieferungsinformationen und zum Empfangen eines Signals konfiguriert ist, welches Dienstführungsinformationen trägt, welche Medienobjektlisten-Informationen aufweisen, welche Medienobjekte auflisten, wobei die Medienobjektlisten-Informationen durch eine logische Einheit gruppiert werden und jede Gruppe durch eine Kennung identifiziert wird, wobei mindestens eine der Gruppen, welche durch die gleiche Kennung identifiziert wird, über einen gleichen Übertragungsweg empfangen wird und wobei die Medienobjektlisten-Informationen Medienobjekt-Zugangsinformationen aufweisen, wobei die Medienobjekt-Zugangsinformationen ermöglichen, ein entsprechendes Medienobjekt über einen separaten Übertragungsweg selektiv zu empfangen, welcher von einem Übertragungsweg der gruppierten Medienobjektlisten-Informationen verschieden ist;
eine Steuerungseinheit (600), welche zum Decodieren des empfangenen Signals und zum Decodieren der Dienstführungsinformationen konfiguriert ist; und
einen Kommunikator (520), welcher zum Empfangen der Medienobjektlisten-Informationen und der Medienobjekte, welche in den Medienobjektlisten-Informationen aufgelistet sind, aufgrund der Medienobjekt-Zugangsinformationen der decodierten Dienstführungsinformationen konfiguriert ist.

6. Vorrichtung nach Anspruch 5, wobei die Medienobjekt-Zugangsinformationen Zugangsinformationen über eine einzelne Medienobjekteinheit oder Zugangsinformationen über eine Medienobjektgruppe entsprechen, wobei mehrere Medienobjekte zu einer einzelnen Einheit gruppiert sind.

7. Vorrichtung nach Anspruch 5, wobei die Medienobjektlisten-Informationen in einem Interaktivitätsfragment der Dienstführungsinformationen eingeschlossen sind.

8. Vorrichtung nach Anspruch 5, wobei die Medienobjekt-Zugangsinformationen ein Element, welches Informationen beschreibt, welche dem Medienobjekt ermöglichen, zu einer Sitzung eines Rundfunksystems übertragen zu werden, und ein Element aufweisen, welches Informationen beschreibt, welche dem Medienobjekt ermöglichen, über einen interaktiven Kanal zu einer Sitzung eines zugänglichen Systems übertragen zu werden.

9. Vorrichtung nach Anspruch 5, wobei die Steuerungseinheit (600) Folgendes umfasst:
einen Internetprotokoll-(IP)-Entkapseler (611), welcher zum Entkapseln eines IP-Datagramms konfiguriert ist, welches die Dienstführungsinformationen aufweist;
einen Teilnehmerdatagrammprotokoll-(UDP, User Datagram Protocol)-Decodierer (612), welcher zum Decodieren der entkapselten Daten aufgrund des UDP konfiguriert ist;
einen (FLUTE, File Delivery over Unidirectional Transport)-Decodierer (614) zur Dateilieferung über ein unidirektionales Transportprotokoll, welcher zum Decodieren der UDP-decodierten Daten aufgrund des FLUTE konfiguriert ist; und
einen Parser (617), welcher zum Parsen der FLUTEdecodierten Daten konfiguriert ist.

## Revendications

1. Procédé de traitement d'information de guide de services, comprenant :
la réception (S110) d'informations de livraison de guide de services électroniques ;
la réception (S120) d'informations de guide de services électroniques comprenant des informations de liste d'objets médias listant des objets médias, dans lequel les informations de liste d'objets médias sont groupées par une unité logique et chaque groupe est identifié par un identifiant, dans lequel au moins l'un des groupes identifiés par le même identifiant est reçu par l'intermédiaire d'un même chemin de transmission,
et dans lequel les informations de liste d'objets médias comprennent des informations d'accès d'objet média, dans lequel les informations d'accès d'objet média permettent à un objet média correspondant d'être sélectivement reçu par l'intermédiaire d'un chemin de transmission séparé différent d'un chemin de transmission des informations de liste d'objets médias groupées ; et
la réception (S130) de l'objet média en utilisant les informations d'accès d'objet média.

2. Procédé selon la revendication 1, dans lequel les informations d'accès d'objet média correspondent à des informations d'accès sur une seule unité d'objet média ou à des informations d'accès sur un groupe d'objets médias, dans lequel de multiples objets médias sont groupés en une seule unité.

3. Procédé selon la revendication 1, dans lequel les informations de liste d'objets sont comprises dans un fragment d'interactivité des informations de guide de services.

4. Procédé selon la revendication 1, dans lequel les informations d'accès d'objet média comprennent un élément décrivant des informations permettant à l'objet média d'être transmis à une session d'un système de diffusion, et un élément décrivant des informations permettant à l'objet média d'être transmis par l'intermédiaire d'un canal interactif à une session d'un système accessible.

5. Appareil de traitement des informations de guide de services, comprenant :
une unité de réception (510, 520) configurée pour recevoir des informations de livraison de guide de services électroniques et recevoir un signal transportant des informations de guide de services comprenant des informations de liste d'objets médias listant des objets médias, dans lequel les informations de liste d'objets médias sont groupées par une unité logique et chaque groupe est identifié par un identifiant, dans lequel au moins l'un des groupes identifiés par le même identifiant est reçu par l'intermédiaire d'un même chemin de transmission, et dans lequel les informations de liste d'objets médias comprennent des informations d'accès d'objet média, dans lequel les informations d'accès d'objet média permettant à un objet média correspondant d'être sélectivement reçu par l'intermédiaire d'un chemin de transmission séparé différent d'un chemin de transmission des informations de liste d'objet média groupées ;
une unité de commande (600) configurée pour décoder le signal reçu et décoder les informations de guide de services ; et
un communicateur (520), configuré pour recevoir les informations de liste d'objets médias et les objets médias listés dans les informations de liste d'objets médias, sur la base des informations d'accès d'objet média des informations de guide de services décodées.

6. Appareil selon la revendication 5, dans lequel les informations d'accès d'objet média correspondent à des informations d'accès sur une seule unité d'objet média ou à des informations d'accès sur un groupe d'objets médias, dans lequel de multiples objets médias sont groupés en une seule unité.

7. Appareil selon la revendication 5, dans lequel les informations de liste d'objets médias sont comprises dans un fragment d'interactivité des informations de guide de services.

8. Appareil selon la revendication 5, dans lequel les informations d'accès d'objet média comprennent un élément décrivant des informations permettant à l'objet média d'être transmis à une session d'un système de diffusion, et un élément décrivant des informations permettant à l'objet média d'être transmis par l'intermédiaire d'un canal interactif à une session d'un système accessible.

9. Appareil selon la revendication 5, dans lequel l'unité de commande (600) comprend :
une unité de décapsulation (611) de protocole internet (IP) configuré pour désencapsuler un datagramme IP comprenant les informations de guide de services ;
un décodeur de protocole de datagramme utilisateur (UDP) (612) configuré pour décoder les données désencapsulées sur la base de l'UDP ;
un décodeur de livraison de fichier sur un protocole de transport unidirectionnel (FLUTE) (614) configuré pour décoder les données décodées par UDP sur la base de la FLUTE ; et
un analyseur (617) configuré pour analyser les données décodées de FLUTE.
